# EUROPEAN PATENT APPLICATION

(11) **EP 1 536 158 A2**
(43) Date of publication of application: **01.06.2005**
(21) Application number: 04028127.1
(22) Date of filing: 26.11.2004
(51) Int. Cl.: F16H 3/62

(54) **Planetary gearset mechanism of double sun gear type**

(30) Priority: 28.11.2003 JP 2003398906
(71) Applicant: JATCO Ltd, Fuji-shi, Shizuoka 417-8585 (JP)
(72) Inventor: Nasu, Yuki Jatco Ltd., Fuji-shi Shizuoka 417-8585 (JP); Takahashi, Kota Jatco Ltd., Fuji-shi Shizuoka 417-8585 (JP); Ikeda, Youichi Jatco Ltd., Fuji-shi Shizuoka 417-8585 (JP)
(74) Representative: Grünecker, Kinkeldey, Stockmair & Schwanhäusser Anwaltssozietät

(57) **Abstract**

A double-sun-gear planetary gear mechanism includes two sun gears, a ring gear, a plurality of pinions engaging with the sun gears and the ring gears, and a planetary carrier supporting the pinions. The planetary carrier includes a first support portion supporting first ends of pinion shafts of the pinions, a second support portion supporting second ends of the pinion shafts. The first and second support portions are connected by a plurality of connecting portions each located radially outside the sun gears, and circumferentially between adjacent two of the pinions. The planetary carrier further includes an inner center portion extending radially inwardly between the sun gears, and including a portion for connecting the planetary carrier with a center shaft.

## Description

### BACKGROUND OF THE INVENTION

The present invention relates to a planetary gear mechanism of a double sun gear type having two sun gears.

A double sun gear type planetary gear mechanism includes two sun gears disposed axially in a row, engaged with pinions, and connected, respectively, with two different rotating members. Even in an layout in which one sun gear is surrounded by a carrier, the other sun gear can be connected to a housing through a brake.

Japanese Patent Application Publication No. H11(1999)-037230 shows a double sun gear type planetary gear mechanism including a rotation member located radially inside two sun gears, and connected with a pinion carrier through a space between the sun gears, so that a wide variety of speed ratios can be attained.

However, it is not achieve to embody this planetary gear mechanism of the double sun gear type.

### SUMMARY OF THE INVENTION

It is an object of the present invention to provide a construction implementing a double sun gear planetary gear mechanism.

According to one aspect of the present invention, a double-sun-gear planetary gear mechanism comprises: a first sun gear; a second sun gear; a first rotation member connected with the first sun gear; a second rotation member connected with the second sun gear; third rotation member disposed radially inside the first rotation member and the second rotation member; a plurality of pinions each engaging with both the first sun gear and the second sun gear; and a planetary carrier supporting each of the pinions at both ends rotatably. The planetary carrier includes; a plurality of pinion shafts each supporting one of the pinions, and each extending axially from a first end to a second end; a first support portion supporting the first ends of the pinion shafts; a second support portion supporting the second ends of the pinion shafts; a plurality of connecting portions connecting the first and second support portions, each of the connecting portions being located radially outside the first sun gear and the second sun gear, and circumferentially between adjacent two of the pinions; and an inner center portion extending radially inwardly between the first sun gear and the second sun gear, and connecting the planetary carrier with the third rotation member.

According to another aspect of the invention, a double-sun-gear planetary gear mechanism comprises: a first sun gear; a second sun gear; a plurality of pinions each engaging with both the first sun gear and the second sun gear; a ring gear engaging with the pinions; and a planetary carrier supporting each of the pinions at both ends rotatably. The planetary carrier includes; a first carrier plate including a first annular plate portion supporting first ends of the pinions; a second carrier plate including a second annular plate portion supporting second ends of the pinions. The first and second carrier plates are joined together by a plurality of fastening devices each extending axially at a position circumferentially between two of the pinions. One of the first and second carrier plates includes a center.disk portion which is located axially between the first and second annular plate portions and which is formed with a plurality of pinion receiving holes each receiving one of the pinions. The center disk portion extends radially inwards between the first and second sun gears.

### BRIEF DESCRIPTION OF THE DRAWINGS

FIG. 1 is a schematic view showing an automatic transmission provided with a planetary gear mechanism of a double sun gear type according to one embodiment of the present invention.

FIG. 2 is a table showing an engagement logic of friction engagement elements to select one of gear speeds.

FIG. 3 is a speed diagram in each gear speed of the automatic transmission.

FIG. 4 is a perspective view showing a third carrier C3 of the automatic transmission of FIG.1 as viewed from a front side.

FIG. 5 is a perspective view showing the third carrier C3 of the automatic transmission of FIG.1 as viewed from a rear side.

FIG. 6 is a rear view showing the third carrier C3 of the automatic transmission of FIG.1

FIG. 7 is a sectional view taken along a section line S7-S7 of FIG. 6.

FIG. 8 is an enlarged view showing the pinion support structure of the third carrier C3.

### DETAILED DESCRIPTION OF THE INVENTION

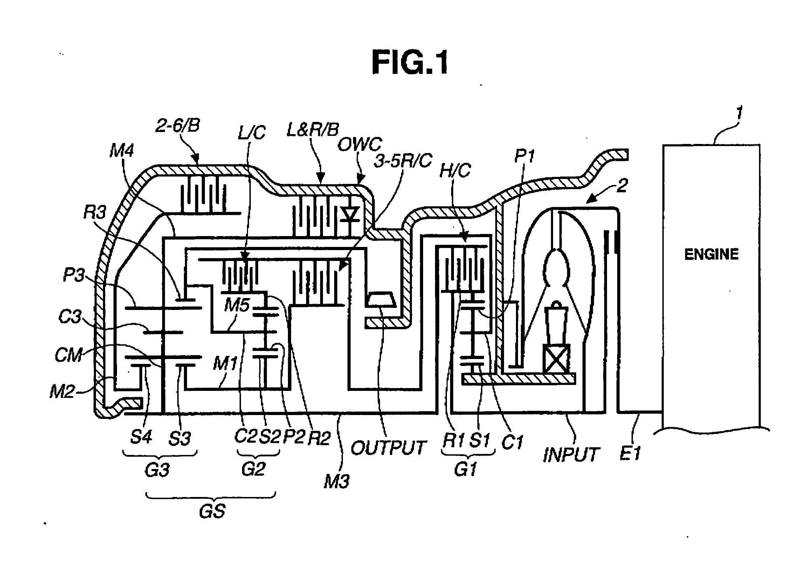

FIG. 1 schematically shows an automatic transmission including a planetary gear mechanism of a double sun gear type according to one embodiment of the present invention.

Rotation of an engine 1 is transmitted through an engine output shaft E1 to a torque converter 2 to increase torque. The rotation with increased torque is transmitted through an input shaft INPUT to a transmission mechanism. The torque converter 2 has a lockup clutch mechanism to directly connect the engine output shaft E1 with the input shaft INPUT when the efficiency in transmission of torque is decreased.

The transmission mechanism includes a first planetary gear set G1 and a planetary gear system GS, and transmits the rotation from the input shaft INPUT to an output gear OUTPUT.

The first planetary gear set G1 is a planetary gear set of a single pinion type serving as a reduction device. The single pinion type first planetary gear set G1 includes a first sun gear S1, a first ring gear R1, and a first carrier C1 supporting first pinions P1 engaging with both the sun gear S1 and the ring gear R1.

The planetary gear system GS includes a second planetary gear set G2 and a third planetary gear set G3.

The second planetary gear set G2 is a planetary gear set of a single pinion type including a second sun gear S2, a second ring gear R2, and a second carrier C2 supporting second pinions P2 engaging with both the sun gear S2 and the ring gear R2.

The third planetary gear set G3 is a double sun gear type planetary gear set or double sun gear type planetary gear mechanism including a third sun gear (a first sun gear of the double sun gear type planetary gear mechanism G3) S3; a fourth sun gear (a second sun gear in the double sun gear type planetary gear mechanism) S4; third pinions P3 (pinions in the double sun gear type planetary gear mechanism) each engaging with both the third and fourth sun gears; a third carrier (a planetary carrier or planet carrier in the double sun gear type planetary gear mechanism) C3 supporting the third pinions P3; and a third ring gear R3 (a ring gear in the double sun gear type planetary gear mechanism) engaging with the third pinions P3.

The planet carrier C3 includes a center member CM serving as a center disk portion. The center member extends radially between the sun gears S3 and S4.

The input shaft INPUT is connected with the first ring gear R1 to transmit driving force from the engine 1 as a driving source through the torque converter 2.

The output gear OUTPUT is connected with the second carrier C2 to transmit output driving force through a final gear (not shown) to driving wheels of a vehicle.

In this example, the second sun gear S2 is integrally connected with a first connection member (or a first rotation member) M1. The fourth sun gear S4 is integrally connected with a second connection member (or a second rotation member) M2.

In this example, the center member CM is integrally connected with a third connection member (a third rotation member of the double sun gear type planetary gear mechanism) M3 located radially inside the first connection member M1 and the second connection member M2. The third carrier C3 is integrally connected with a fourth connection member M4. The second carrier C2 and the third ring gear R3 are integrally connected by a fifth connection member M5.

A low clutch L/C selectively connects and disconnects the first carrier C1 with the second ring gear R2. A 2-6 brake 2-6/B selectively stops rotation of the fourth sun gear S4. A 3-5 reverse clutch 3-SR/C selectively connects and disconnects the first carrier C1 with the second sun gear S2 and the third sun gear S3. A high clutch H/C selectively connects and disconnects the input shaft INPUT with the center member CM. A low reverse brake L&R/B selectively stops rotation of the third carrier C3.

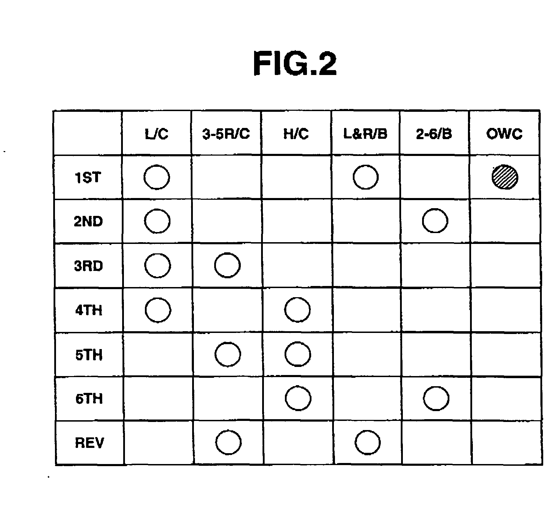

Each of the clutches L/C, 3-SR/C and H/C and the brakes L&R/B and 2-6/B is connected with a hydraulically-operated shift control apparatus (not shown) to produce engagement pressure (shown by solid line circles) and disengagement pressure (unmarked) in each gear speed of six forward speeds and one reverse speed, as shown in FIG. 2. As the shift control apparatus, it is possible to employ an electrically-controlled type, a hydraulically-controlled type, and an electrically and hydraulically controlled type.

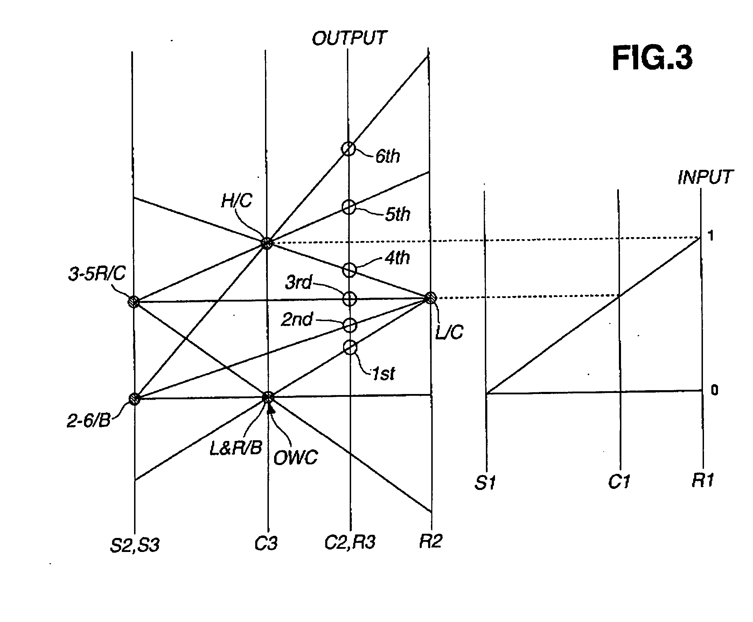

FIG. 3 is a speed diagram showing the rotating and held states of the members in each gear speed of the six forward speeds and one reverse speed of the automatic transmission shown in FIG. 1. The first through sixth speeds and reverse speed can be attained according to the table in FIG. 2

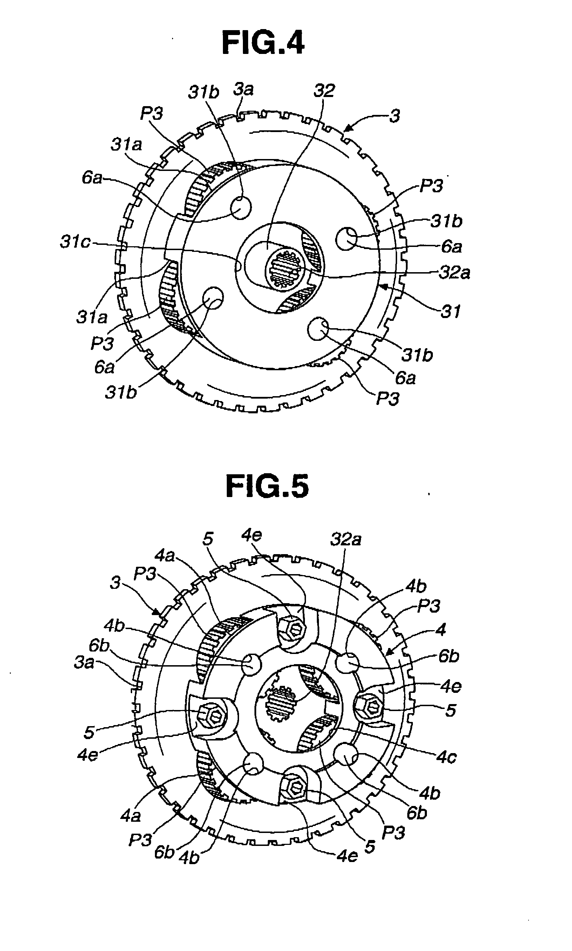

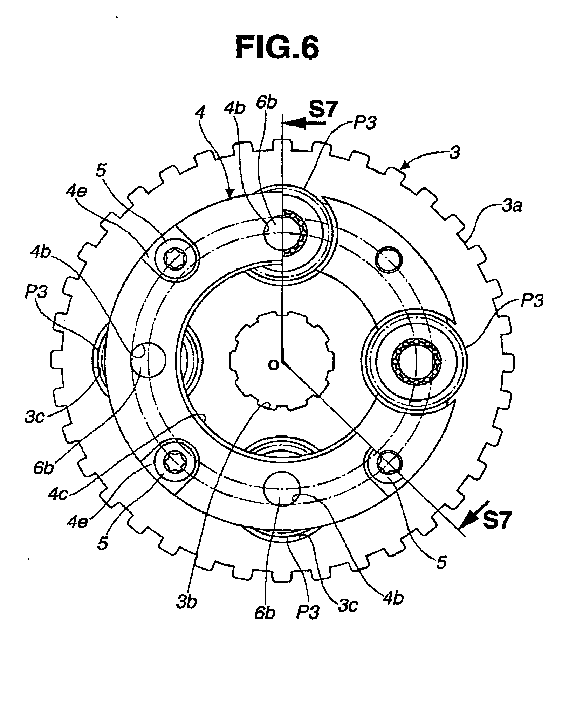

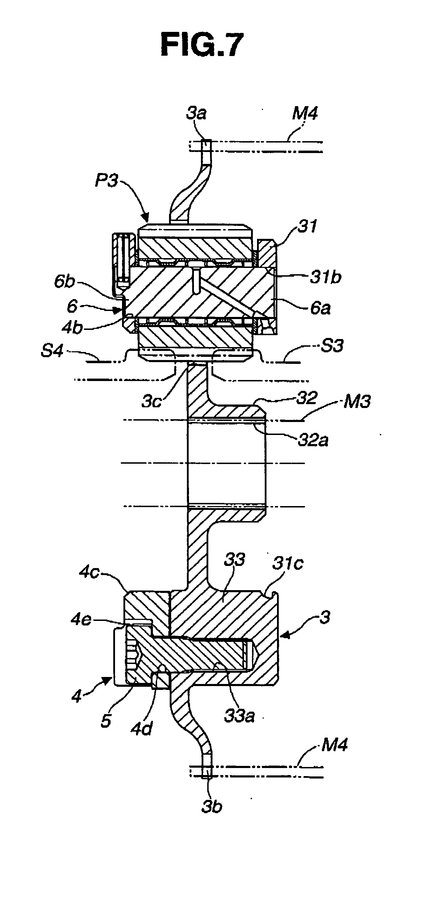

FIG. 4 is a perspective view showing the third carrier C3 as viewed from a front side (the third sun gear S3's side). FIG. 5 is a perspective view showing the third carrier C3 as viewed from a rear side (the fourth sun gear S4's side). FIG. 6 is a rear view showing the third carrier C3. FIG. 7 is a sectional view taken along a section line S7-S7 of FIG. 6.

The third carrier C3 is composed of a first carrier plate 3 and a second carrier plate 4. Four third pinions P3 are disposed between the first carrier plate 3 and the second carrier plate 4 which are fastened with fastening devices 5 from the second carrier plate 4's side. In this example, the fastening devices are bolts 5.

The first carrier plate 3 has a center disk portion including an outer center portion extending radially outwards to an outer circumference which is located radially outside the meshing position of the third pinions P3 and the third ring gear R3, and formed with a toothed portion or rack portion 3a engaging with the fourth connection member M4. The center disk portion of the first carrier plate 3 includes an inner center portion formed with an inner flange or boss portion 32 projecting at the center of the first carrier plate 3 toward the third gear S3. The inner flange 32 has a center spline hole 32a into which the third connection member M3 is inserted. The inner flange 32 has an outside diameter sized to avoid interference with the third sun gear S3 and the fourth sun gear S4.

The first carrier plate 3 includes four pinion holes 3c formed, in the center disk portion. The four pinion holes 3c are arranged circumferentially at 90° intervals. The diameter of the pinion holes 3c is greater than the diameter of the third pinions P3. Each of the pinions P3 extends axially through one of the pinion holes 3c.

The first carrier plate 3 includes an annular plate portion 31 covering the third pinions P3 from the sun gear S3's side, and supported by four plate support portions (or connecting portions) 33 each formed between adjacent two of the pinion holes 3c. The four plate support (connecting) portions 33 are arranged at 90° intervals in the circumferential direction. The four connecting portions 33 and the four pinion holes 3c are arranged alternately in a circle. The annular plate portion 31 serves as a support portion for supporting the pinions.

Each of the plate support (connecting) portions 33 is located at a position radially outside the sun gear S3 and the sun gear S4, circumferentially between adjacent two of the third pinions P3, and formed with a screw hole 33a into which one of the bolts 5 is screwed.

The outside diameter of the annular plate portion 31 and the plate support portions 33 are arranged to avoid interference with the meshing locations of the third pinions P3 and the third ring gear R3. The first carrier plate 3 is formed with circumferential cutout portions 31a each receiving a radial outer portion of one of the third pinions P3. Each of the third pinions P3 protrudes radially outwards from one of the cutout portions 31a. The four cutout portions 31a and the four plate support portions (or connecting portions) 33 are arranged alternately around the centre axis of the first carrier plate 3.

The annular plate portion 31 is formed with four pinion support holes 31b each supporting a first end 6a of a pinion shaft 6 supporting one of the third pinions P3, and a center opening 31c into which the third sun gear S3 is inserted. The center opening 31c is formed at the center of the annular plate portion 31 and sized to avoid interference with meshing locations of the third pinions P3 and the third sun gear S3.

The second carrier plate 4 is substantially identical in shape to the annular plate portion 31 of the first carrier plate 3. The second carrier plate 4 and the annular plate portion 31 of the first carrier plate 3 serve as support portions supporting the third pinions P3 on both sides. The second carrier plate 4 is formed with circumferential cutout portions 4a substantially identical in shape to the cutout portions 31a of the annular plate portion 31, and four pinion support holes 4b equal in shape to the pinion support holes 31b of the first carrier plate 3. Each of the pinion support holes 4b supports a second end 6b of the corresponding pinion shaft 6. The second carrier plate 4 includes a center opening 4c formed at the center of the second carrier plate 4, and arranged to receive the fourth sun gear S4.

The second carrier plate 4 is formed with bolt holes (or fastener holes) 4d each aligned with a unique one of the screw holes 33a in the plate support portion 33. Each of the bolts 5 is inserted through one of the bolt holes 4d into a corresponding one of the screw holes 33a. The second carrier plate 4 is formed with a spot facing portion 4e around each of the bolt holes 4d so that the head of each bolt 5 is sunk under the surface of the second carrier plate 4 when the bolt is tightened into the screw hole 33a,

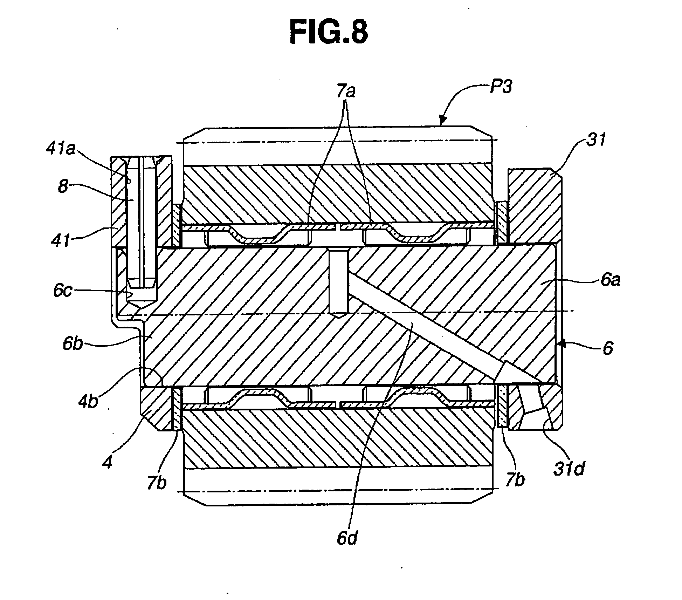

FIG. 8 shows the support structure for the third pinions P3 disposed between the first career plate 3 and the second career plate 4.

Each of the third pinions P3 is rotatably mounted through pinion needles 7a on the corresponding pinion shaft (pinion axle) 6. A pinion washer 7b is interposed between each of the third pinions P3 and the annular plate portion 31, and another pinion washer 7b is interposed between each of the third pinions P3 and the second carrier plate 4.

Each of the pinion shafts 6 is fixed unrotatable by a pin 8 inserted through a pin receiving hole 41a formed in a pin receiving portions 41 of the second carrier plate 4, into a pin hole 6c formed in the pinion shaft 6, as shown in FIG. 8. The pin 8 is inserted through the pin receiving hole 41a into the pin hole 6c by press fit, so that the pinion shaft 6 is held stationary relative to the second carrier plate 4.

An oil passage 6d is formed inside each of the pinion shafts 6 to supply lubricating oil to the pinion shaft 6 and the pinion needles 7a. The annular plate portion 31 of the first carrier plate 3 is formed with oil holes 31d each communicating with one of the oil passages 6d of the pinion shafts 6.

The first carrier plate 3 and the second carrier plate 4 are assembled as follows. First, the pinion washers 7b, the third pinions P3, the pinion shafts 6, the pinion needles 7a, and the pinion washers 7b are set to the second carrier plate 4. Second, the first carrier plate 3 is set to the first ends of the pinion shafts 6 so as to cover the third pinions P3 and to position the first end 6a of each pinion shaft 6 at the correct position of the corresponding pinion support hole 31b. Third, the first carrier plate 3 and the second carrier plate 4 are fastened by tightening bolts 5.

The first carrier plate 3 and the second carrier plate 4 can be formed with pin holes receiving a pin for positioning the first and second carrier plates 3 and 4, before fastening.

As mentioned above, in the planetary gear set of the double sun gear type according to the embodiment, the plate support (or connecting) portions 33 are arranged, alternately with the third pinions P3, around the third sun gear S3 and the fourth sun gear S4, and thereby connects the first and second carrier plates 3 and 4 with no interference with the third sun gear S3, the fourth sun gear S4, and the third pinions P3. With these connecting portions 33, it is possible to achieve the double sun gear type planetary gear mechanism.

The third carrier C3 has two part structure including the first carrier plate 3 and the second carrier plate 4 each formed with pinion support holes 31b and 4b supporting the pinion shafts 6 of the pinions P3. The first and second carrier plates 3 and 4 are joined together by fastening devices such as bolts. Therefore, as compared with a three part structure of earlier technology, this structure is advantageous for the assembly operation, and the reduction of the number of parts.

The first carrier plate 3 includes the circular center disk portion formed with the rack portion 3a engaging with the fourth connection member M4. Therefore, it is possible to attain various gear speeds.

This application is based on a prior Japanese Patent Application No. 2003-398906. The entire contents of the Japanese Patent Application No. 2003-398906 with a filing date of November 28, 2003 are hereby incorporated by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A double-sun-gear planetary gear mechanism comprising:
a first sun gear;
a second sun gear;
a first rotation member connected with the first sun gear;
a second rotation member connected with the second sun gear;
a third rotation member disposed radially inside the first rotation member and the second rotation member;
a plurality of pinions each engaging with both the first sun gear and the second sun gear; and
a planetary carrier supporting each of the pinions at both ends rotatably, the planetary carrier including;
a plurality of pinion shafts each supporting one of the pinions, and each extending axially from a first end to a second end;
a first support portion supporting the first ends of the pinion shafts;
a second support portion supporting the second ends of the pinion shafts;
a plurality of connecting portions connecting the first and second support portions, each of the connecting portions being located radially outside the first sun gear and the second sun gear, and circumferentially between adjacent two of the pinions ; and
an inner center portion extending radially inwardly between the first sun gear and the second sun gear, and connecting the planetary carrier with the third rotation member.

2. The double-sun-gear planetary gear mechanism as claimed in Claim 1, wherein the first support portion is formed in a first carrier plate; the second support portion is formed in a second carrier plate; the connecting portions are integral parts of one of the first and second carrier plates; and the inner center portion is an integral part of one of the first and second carrier plates.

3. The double-sun-gear planetary gear mechanism as claimed in Claim 2, wherein each of the connecting portions is formed with an axial hole, and the first and second carrier plates are joined by a plurality of fastening devices each extending axially in one of the axial holes formed in the connecting portions.

4. The double-sun-gear planetary gear mechanism as claimed in Claim 3, wherein the double-sun-gear planetary gear mechanism further comprises a fourth rotation member located radially outside the pinions; and the planetary carrier further includes an outer center portion extending radially outwards between adjacent two of the pinions, and connecting the planetary carrier with the fourth rotation member.

5. The double-sun-gear planetary gear mechanism as claimed in Claim 4, wherein the double-sun-gear planetary gear mechanism further includes a ring gear engaging with the pinions; and the outer center portion has an outer circumference which is located radially outside the ring gear and which is engaged with the fourth rotation member surrounding the ring gear.

6. The double-sun-gear planetary gear mechanism as claimed in Claim 3, wherein the connecting portions are integral parts of the first carrier plate; the second carrier plate is formed with fastener holes each receiving one of the fastening devices; and each of the connecting portions is formed with a screw hole into which one of the fastening devices is screwed.

7. The double-sun-gear planetary gear mechanism as claimed in Claim 3, wherein the planetary carrier further includes a center disk portion including the inner center portion; the center disk portion is formed with a plurality of pinion receiving holes each receiving one of the pinions extending axially; the center disk portion is located axially between the first and second support portions; and the center disk portion is an integral part of one of the first and second carrier plates.

8. The double-sun-gear planetary gear mechanism as claimed in Claim 7, wherein the first support portion of the first carrier plate is in the form of an annular plate, and formed with a center opening receiving the first sun gear; and the second support portion of the second carrier plate is in the form of an annular plate, and formed with a center opening receiving the second sun gear.

9. The double-sun-gear planetary gear mechanism as claimed in Claim 8, wherein the first support portion of the first carrier plate is formed with a plurality of pinion support holes each fixedly supporting the first end of one of the pinion shafts, and the second support portion of the second carrier plate is formed with a plurality of pinion support holes each fixedly supporting the second end of one of the pinion shafts.

10. The double-sun-gear planetary gear mechanism as claimed in Claim 8, wherein the inner center portion of the first carrier plate includes a boss portion mounted on the third rotation member and coupled with the third rotation member by splines.

11. The double-sun-gear planetary gear mechanism as claimed in Claim 7, wherein each of the first and second support portions is formed with a plurality of circumferential cutout portions; and each of the pinions protrudes radially outwards from one of the circumferential cutout portions of the first support portion on a first side of the center disk portion, and radially outwards from one of the circumferential cutout portions of the second support portion on a second side of the center disk portion.

12. A double-sun-gear planetary gear mechanism comprising:
a first sun gear;
a second sun gear;
a plurality of pinions each engaging with both the first sun gear and the second sun gear;
a ring gear engaging with the pinions; and
a planetary carrier supporting each of the pinions at both ends rotatably, the planetary carrier including;
a first carrier plate including a first annular plate portion supporting first ends of the pinions, and
a second carrier plate including a second annular plate portion supporting second ends of the pinions,
the first and second carrier plates being joined together by a plurality of fastening devices each extending axially at a position circumferentially between two of the pinions,
one of the first and second carrier plates including a center disk portion which is located axially between the first and second annular plate portions and which is formed with a plurality of pinion receiving holes each receiving one of the pinions, the center disk portion extending radially inwards between the first and second sun gears .
